# EUROPÄISCHE PATENTSCHRIFT

(11) **EP 1 005 264 B1**
(45) Veröffentlichungstag und Bekanntmachung des Hinweises auf die Patenterteilung: **17.04.2002**
(21) Anmeldenummer: 98943729.8
(22) Anmeldetag: 14.07.1998
(51) Int. Cl.: A01D 45/02

(54) **GERÄT ZUM ERNTEN VON MAIS**
APPARATUS FOR HARVESTING MAIZE
APPAREIL POUR LA RECOLTE DU MAIS

(30) Priorität: 18.07.1997 DE 19730912
(43) Veröffentlichungstag der Anmeldung: 07.06.2000
(73) Patentinhaber: CLAAS SAULGAU GMBH, 88348 Saulgau (DE)
(72) Erfinder: WIEGERT, Ludger, D-48346 Ostbevern (DE)
(86) Internationale Anmeldenummer: EP9804371
(87) Internationale Veröffentlichungsnummer: WO9903323

(56) Entgegenhaltungen:
- DE-A- 3 231 953
- DE-U- 6 809 134
- FR-A- 2 522 925
- US-A- 1 351 665
- US-A- 2 527 190
- US-A- 2 870 593
- US-A- 4 845 930

## Beschreibung

Die Erfindung bezieht sich auf ein Gerät zum Ernten von Mais o. dgl. Körnerfrüchten, insbesondere Vorsatzgerät für Mähdrescher oder Feldhäcksler in einer Ausbildung gemäß dem Oberbegriff des Anspruchs 1.

Bei einem bekannten Gerät dieser Art (DE-B-17 57 213; US-A-2 870 593) haben die Pflückwalzen parallel zueinander ausgerichtete Drehachsen. Die Konizität der Arbeitsflächen der Pflückwalzen schafft dementsprechend einen Durchgangsspalt, der sich zum rückwärtigen Basisende der Pflückwalzen hin in der Breite verringert.

Bei einem anderen bekannten Gerät (DE-A-20 00 140, FR-A-1 268 615) haben die Pflückwalzen zylindrische Arbeitsflächen. Die Drehachsen der Pflückwalzen divergieren zum Frontende der Pflückwalzen hin, so daß hierdurch ebenfalls ein Durchgangsspalt gebildet wird, der sich zu seinem rückwärtigen Ende hin in der Breite verringert.

Bei einem weiterhin bekannten Gerät (DE-C-39 18 362) haben die Pflückwalzen zylindrische Arbeitsflächen und untereinander parallel ausgerichtete Drehachsen und dementsprechend einen über seine Länge gleichbleibend breiten Durchtrittsspalt. Zur Zerkleinerung der geernteten Halme kann dabei unterhalb der Pflückwalzen eine Schneidvorrichtung mit beispielsweise einem rotierenden Schneidmesser vorgesehen sein.

Die Erfindung befaßt sich mit dem Problem ein Erntegerät der eingangs genannten Art zu schaffen, das unter Minderung des Verschleißes an den Pflückwalzen im vorderen Bereich des Durchgangsspaltes einen das Erntegut besonders schonenden Pflückvorgang verwirklicht.

Die Erfindung löst dieses Problem durch eine Erntemaschine mit den Merkmalen des Anspruchs 1. Hinsichtlich wesentlicher weiterer Ausgestaltungen wird auf die Ansprüche 2 bis 9 verwiesen.

Durch die zu den Frontenden der Pflückwalzen hin konvergierende Ausrichtung der Drehachsen der Pflückwalzen kann unter Beibehaltung einer gewünschten Konfiguration des Durchgangsspaltes die Konizität der Pflückwalzen unter dem Gesichtspunkt der Vorgabe einer gewünschten Durchzugsgeschwindigkeit für das Erntegut durch den Durchgangsspalt und deren Anstieg zum Abgabeende des Durchgangsspaltes hin frei gewählt werden. Dementsprechend kann den Pflückwalzen am frontseitigen Einlaufende des Durchgangsspaltes ein verhältnismäßig geringer Durchmesser mit entsprechend niedriger Umfangsgeschwindigkeit bei Umlauf im Betrieb vorgegeben werden, so daß die Einwirkung auf die Halme des Erntegutes bei Beginn des Durchzuges schonend einsetzt und das Eintreten von Schlupf mit der Verschleißfolge an den frontseitigen Enden der Pflückwalzen herabgesetzt ist. In Abstimmung mit dem Konvergenzwinkel der Drechachsen kann den Pflückwalzen ein Konuswinkel vorgegeben werden, der eine verhältnismäßig starke Vergrößerung des Durchmessers des Arbeitskreises der Pflückwalzen, die mit einem starken Anstieg der Umfangsgeschwindigkeit der Arbeitsfläche der Pflückwalzen zum Abgabeende des Durchgangsspaltes hin einhergeht, zur Folge hat. Dieser Geschwindigkeitsanstieg, der bevorzugt etwa 50 % beträgt, erlaubt bei schonender Pflückung eine Erhöhung der Erntegeschwindigkeit oder bei Beibehaltung der Erntegeschwindigkeit eine kürzere Ausführung der Pflückwalzen.

Weitere Einzelheiten und Wirkungen ergeben sich aus der nachfolgenden Beschreibung und der Zeichnung, in der ein Ausführungsbeispiel des Gegenstands der Erfindung schematisch näher veranschaulicht ist. In der Zeichnung zeigen:
- Fig. 1: eine Seitenansicht eines Mähdreschers mit einem Erntegerät nach der Erfindung als Vorsatzgerät,
- Fig. 2: eine Draufsicht auf das Erntegerät gemäß Fig. 1,

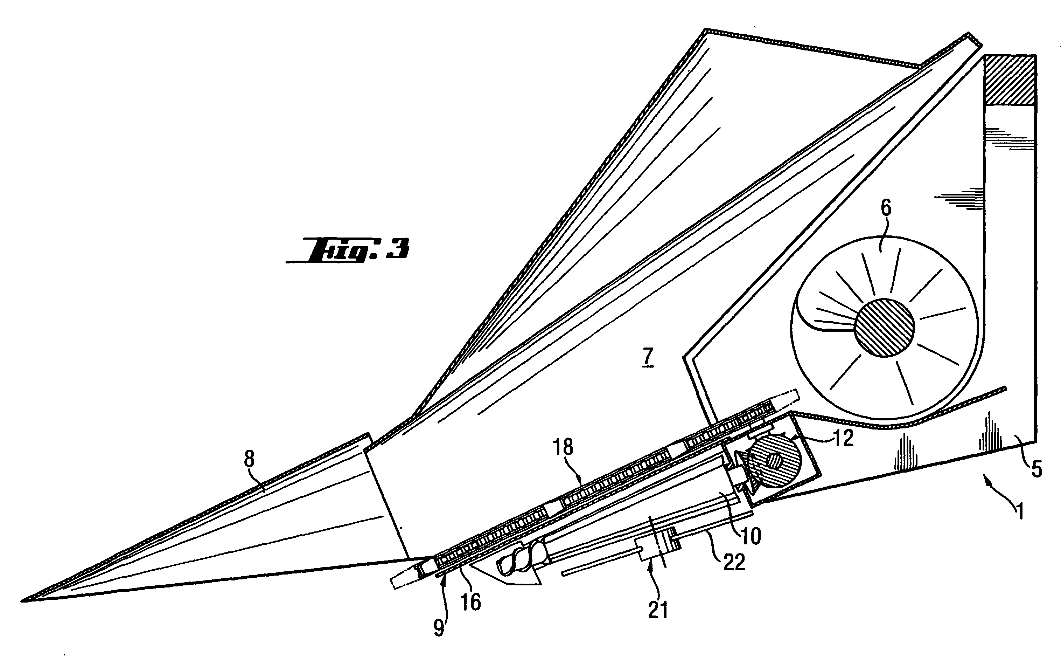

- Fig. 3: eine Seitenansicht des Erntegerätes in Vergrößerung,
- Fig. 4: eine Pflückeinheit des Erntegerätes nach Fig. 2, von unten gesehen,
- Fig. 5: eine Seitenansicht zu Fig. 4, und
- Fig. 6: eine Frontansicht zu Fig. 4.

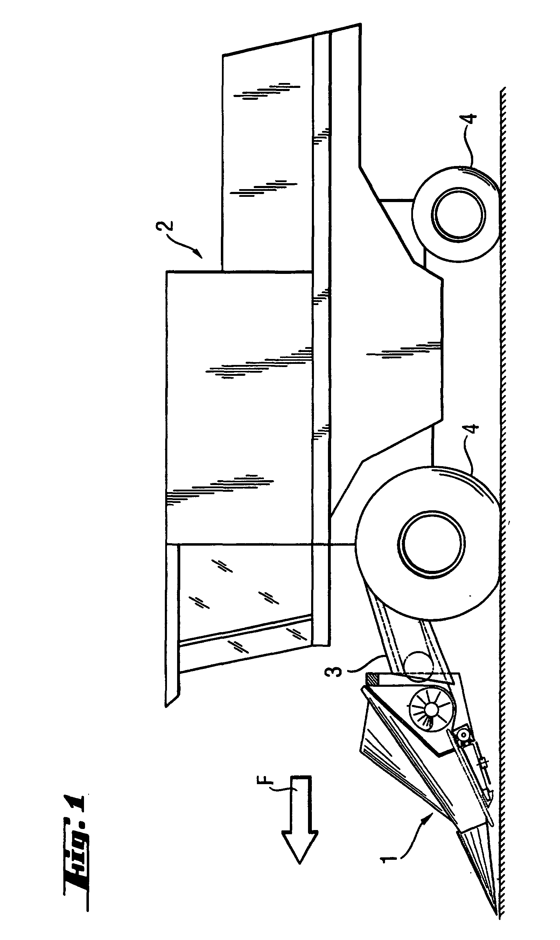

Fig. 1 veranschaulicht ein Gerät 1 zum Ernten von Mais o. dgl. Körnerfrüchten, das ein Vorsatzgerät für einen Mähdrescher 2 bildet, jedoch auch mit einem Feldhäcksler kombiniert werden oder als unabhängige Baueinheit, z.B. als Anbaugerät, Anwendung finden kann. Bei dem dargestellten Ausführungsbeispiel ist das Erntegerät einem Förderer 3 vorgeordnet, der das Erntegut, beispielsweise Maiskolben, dem Bearbeitungsteil des über Räder 4 auf dem Boden abgestützten Mähdreschers 2 zu führen.

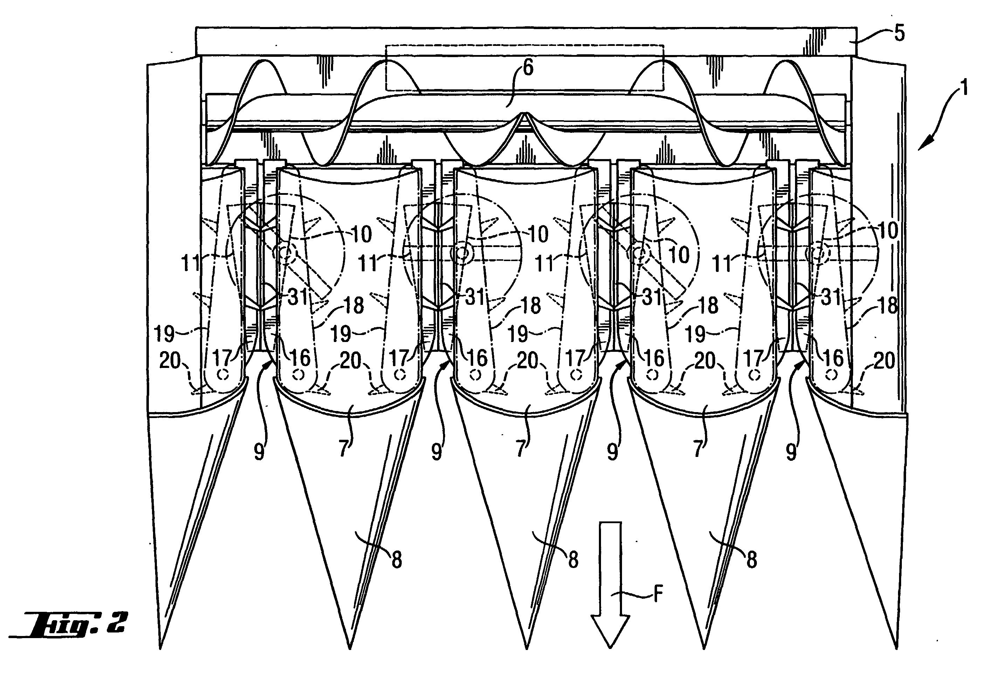

Das Erntegerät 1 umfaßt im einzelnen einen Maschinenrahmen 5, eine Querförderschnecke 6, Abdeckungen 7, Teilerspitzen 8 und eine Anzahl von Pflückeinheiten 9, von denen Fig. 2 beispielsweise vier Pflückeinheiten 9 veranschaulicht.

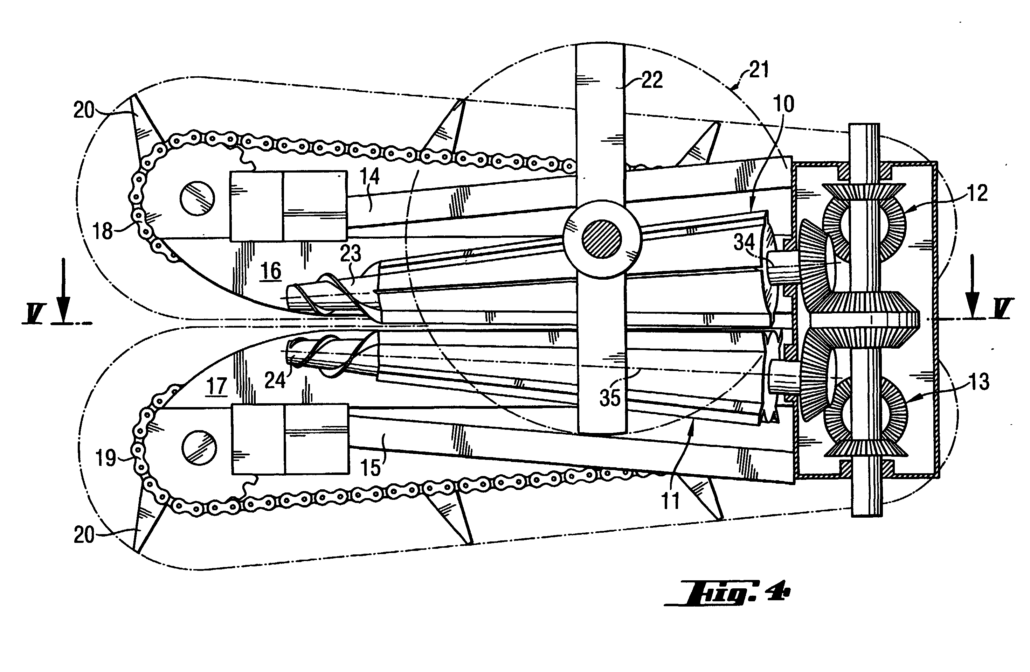

Jede Pflückeinheit 9 umfaßt, wie insbesondere die Fig. 4 bis 6 erkennen lassen, zwei Pflückwalzen 10,11, die jeweils von einem Getriebe 12,13 her angetrieben sind. Oberhalb der Pflückwalzen 10,11 sind von Längsträgern 14,15 abgestützte Pflückplatten 16,17 vorgesehen, oberhalb der Einzugsketten 18,19 gegenläufig einwärts angetrieben umlaufen, die mit Mitnehmern 20 besetzt sind.

Unterhalb der Pflückwalzen 10,11 einer Pflückeinheit 9 kann ein Häckselwerk 21 vorgesehen sein, das die Halme des Ernteguts beim Durchzug durch die Pflückwalzen 10,11 häckselt. Bei dem dargestellten Häckselwerk handelt sich um ein solches mit rotierenden Messern 22, jedoch kann es auch jede geeignete andere Ausbildung erhalten.

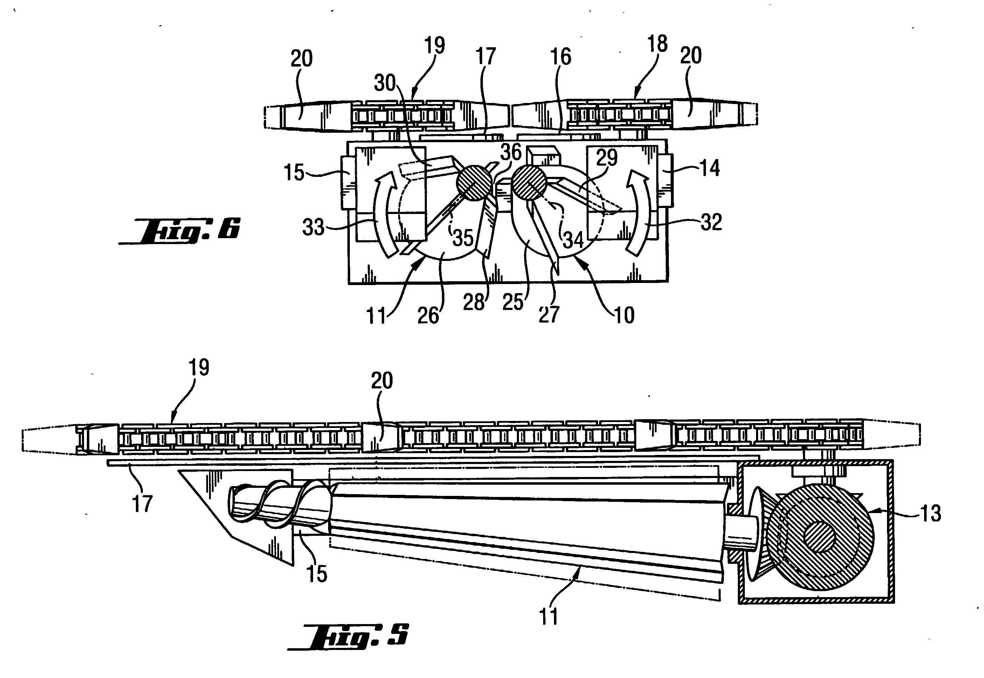

Die Pflückwalzen 10,11 tragen an ihren Frontenden Einzugsschnecken 23,24 und haben einen konischen Grundkörper 25,26, der mit längslaufenden, Arbeitskanten 27,28 definierenden Stegen 29,30 besetzt ist. Die beidseits eines von den Pflückplatten 16,17 gebildeten Pflückspaltes 31 angeordneten Pflückwalzen 10,11 laufen im Betrieb in Richtung der Pfeile 32,33 (Fig. 6) um Drehachsen 34,35 um, die in Fahrrichtung F weisen und zu den Frontenden der Pflückwalzen 10,11 hin konvergierend ausgerichtet sind. Infolge dieser konvergierenden Ausrichtung der Drehachsen 34,35 kann den Pflückwalzen 10,11 eine Konizität vorgegeben werden, die ausschließlich unter Berücksichtigung des gewünschten Anstiegs der Umfangsgeschwindigkeit der konischen Arbeitsflächen, die von den Arbeitskanten 27,28 der Pflückwalzen 10,11 durchlaufen werden, zum Auslaufende des Durchgangsspaltes 36 hin gewählt werden kann, der zwischen den Pflückwalzen 10,11 ausgebildet ist.

Die Arbeitskanten 27 der einen Pflückwalze 10 sind bei dem dargestellten Ausführungsbeispiel (Fig. 6) zu den Arbeitskanten 28 der anderen Pflückwalze 11 jeweils auf Lücke versetzt, und die Arbeitskanten 27,28 definieren den Durchgangsspalt 36 jeweils bei Durchlaufen der Winkelstellung mit geringstem Abstand zum Walzengrundkörper 25,26 der benachbarten Pflückwalze mit deren Mantelfläche. Die Breite des so definierten Durchgangsspaltes 36 zwischen den Pflückwalzen 10,11 kann an deren Frontenden etwa 6 bis 15 mm, vorzugsweise etwa 8 bis 12 mm, und an deren Basisenden etwa 2 bsi 10 mm, vorzugsweise etwa 3 bis 6 mm betragen.

Bei einer abgewandelten Ausführung können die Arbeitskanten 27,28 beider Pflückwalzen 10,11 bei Durchlaufen der Winkelstellung mit jeweils geringstem Abstand zur Arbeitsfläche der benachbarten Pflückwalze den Arbeitskanten der benachbarten Pflückwalze jeweils fluchtend gegenüberliegen und dabei zwischen sich den Durchgangsspalt 36 begrenzen. Bei dieser Ausgestaltung kann der Durchgangsspalt 36 zwischen den Pflückwalzen 10,11 eine im wesentlichen gleichbleibende Breite von etwa 1 bis 10 mm, vorzugsweise etwa 3 bis 5 mm, aufweisen.

Die Grundkörper 25,26 der Pflückwalzen 10,11 weisen eine konische Mantelfläche auf, und die die Arbeitskanten 27,28 darbietenden Stege 29,30 haben eine über ihre Länge gleichbleibende Höhe, so daß die von den Arbeitskanten 27,28 definierten Arbeitsflächen der Pflückwalzen 10,11 die Mantelflächen der Grundkörper 25,26 konisch im Abstand umgibt. Dabei beträgt der Arbeitsflächendurchmesser am Frontende der Pflückwalzen 10,11 etwa 75 bis 125 mm, vorzugsweise 90 bis 110 mm. Die Länge der Pflückwalzen beträgt im allgemeinen zwischen 400 bis 600 mm.

## Patentansprüche

1. Gerät zum Ernten von Mais od.dgl. Körnerfrüchten, insbesondere Vorsatzgerät für Mähdrescher (2) oder Feldhäcksler, mit zwei beidseits eines Pflückspaltes (31) zur Trennung des Fruchtstandes von dem diesen tragenden Pflanzenteil angeordneten Pflückwalzen (10,11), die um in Fahrtrichtung (F) des Geräts (1) weisende Drehachsen (34,35) angetrieben umlaufen und mit mehreren längslaufenden, über ihren Walzengrundkörper (25,26) vorstehende Arbeitskanten (27,28) ausbildenden Stegen (29,30), Rippen od.dgl. Vorsprüngen versehen sind, wobei die über den Umfang der Walzengrundkörper (25,26) verteilt angeordneten Arbeitskanten (27,28) der Pflückwalzen (10,11) während des Einsatzes im Betrieb sich zum Frontende der Pflückwalzen (10,11) hin konisch verjüngende Arbeitsflächen bilden, die miteinander oder mit dem Walzengrundkörper (25,26) der jeweils benachbarten Pflückwalze einen Durchgangsspalt (36) begrenzen, **dadurch gekennzeichnet, daß** die Drehachsen (34,35) der Pflückwalzen (10,11) zu den Frontenden der Pflückwalzen (10,11) hin konvergieren.

2. Gerät nach Anspruch 1, **dadurch gekennzeichnet, daß** die Grundkörper (25,26) der Pflückwalzen (10,11) eine konische Mantelfläche aufweisen, die von den konischen Arbeitsflächen im Abstand konzentrisch umgeben sind.

3. Gerät nach Anspruch 1 oder 2, **dadurch gekennzeichnet, daß** die Arbeitskanten (27) der einen Pflückwalze (10) zu den Arbeitskanten (28) der anderen Pflückwalze (11) jeweils auf Lücke versetzt sind, und die Arbeitskanten (27,28) während des Rotierens bei jeweils geringstem Abstand zum Walzengrundkörper (25,26) der benachbarten Pflückwalze mit deren Mantelfläche den Durchgangsspalt (36) definieren.

4. Gerät nach einem der Ansprüche 1 bis 3, **dadurch gekennzeichnet, daß** die Arbeitskanten (27,28) beider Pflückwalzen (10,11) während des Rotierens bei jeweils geringstem Abstand zur Arbeitsfläche der benachbarten Pflückwalze den Arbeitskanten der benachbarten Pflückwalze jeweils fluchtend gegenüberliegen und zwischen sich den Durchgangsspalt (36) definieren.

5. Gerät nach einem der Ansprüche 1 bis 4, **dadurch gekennzeichnet, daß** die Konizität der Arbeitsflächen der Pflückwalzen (10,11) und der Konvergenzwinkel der Drehachsen (34,35) so aufeinander abgestimmt sind, daß die Umfangsgeschwindigkeit der Arbeitsflächen der Pflückwalzen (10,11) vom Front- zum Basisende hin um zumindest 25%, vorzugsweise etwa 50%, ansteigt.

6. Gerät nach Anspruch 3, **dadurch gekennzeichnet, daß** die Breite des Durchgangsspaltes (36) zwischen den Pflückwalzen (10,11) an deren Frontenden etwa 6 bis 15 mm, vorzugsweise etwa 8 bis 12 mm, und an deren Basisenden etwa 2 bis 10 mm, vorzugsweise etwa 3 bis 6 mm, beträgt.

7. Gerät nach Anspruch 4, **dadurch gekennzeichnet, daß** der Durchgangsspalt (36) zwischen den Pflückwalzen (10,11) eine im wesentlichen gleichbleibende Breite von etwa 1 bis 10 mm, vorzugsweise etwa 2 bis 5 mm, aufweist.

8. Gerät nach einem der Ansprüche 1 bis 7, **dadurch gekennzeichnet, daß** der Arbeitsflächendurchmesser am Frontende der Pflückwalzen (10,11) etwa 75 bis 125 mm, vorzugsweise etwa 90 bis 110 mm, beträgt.

9. Gerät nach einem der Ansprüche 1 bis 7, **dadurch gekennzeichnet, daß** den Pflückwalzen (10,11) eine Häckselvorrichtung (21) zugeordnet ist.

## Claims

1. Apparatus for harvesting corn or the like cereals, in particular a front-mounted apparatus for combine harvesters (2) or forage harvesters, comprising two picking rollers (10, 11) which are arranged on both sides of a picking gap (31) for separation of the grains from the part of the plant carrying same and which are driven in rotation about axes of rotation (34, 35) facing in the direction of travel (F) of the apparatus (1) and which are provided with a plurality of longitudinally extending bars (29, 30), ribs or the like projections which form working edges (27, 28) projecting beyond their main roller body (25, 26), wherein the working edges (27, 28) of the picking rollers (10, 11), which are arranged distributed over the periphery of the main rolling bodies (25, 26), form during use in operation working surfaces which taper conically towards the front end of the picking rollers (10, 11) and which define a passage gap (36) with each other or with the main roller body (25, 26) of the respectively adjacent picking roller, **characterised in that** the axes of rotation (34, 35) of the picking rollers (10, 11) converge towards the front ends of the picking rollers (10, 11).

2. Apparatus according to claim 1 **characterised in that** the main bodies (25, 26) of the picking rollers (10, 11) each have a conical peripheral surface which are concentrically surrounded at a spacing by the conical working surfaces.

3. Apparatus according to claim 1 or claim 2 **characterised in that** the working edges (27) of the one picking roller (8) are respectively staggered in relation to the working edges (28) of the other picking roller (11) and the working edges (27, 28) define the passage gap (36) during the rotary movement at the respective smallest spacing relative to the main roller body (25, 26) of the adjacent picking roller with the peripheral surface thereof.

4. Apparatus according to one of claims 1 to 3 **characterised in that** the working edges (27, 28) of both picking rollers (10, 11) during the rotary movement at the respectively smallest spacing relative to the working surface of the adjacent picking roller are respectively disposed in opposite aligned relationship with the working edges of the adjacent picking roller and define the passage gap (36) between them.

5. Apparatus according to one of claims 1 to 4 **characterised in that** the conicity of the working surfaces of the picking rollers (10, 11) and the angle of convergence of the axes of rotation (34, 35) are so matched to each other that the peripheral speed of the working surfaces of the picking rollers (10, 11) increases from the front end to the base end by at least 25% and preferably about 50%.

6. Apparatus according to claim 3 **characterised in that** the width of the passage gap (36) between the picking rollers (10, 11) at the front ends thereof is about 6 to 15 mm, preferably about 8 to 12 mm, and at their base ends it is about 2 to 10 mm and preferably about 3 to 6 mm.

7. Apparatus according to claim 4 **characterised in that** the passage gap (36) between the picking rollers (10, 11) is of a substantially uniform width of about 1 to 10 mm and preferably about 2 to 5 mm.

8. Apparatus according to one of claims 1 to 7 **characterised in that** the working surface diameter at the front end of the picking rollers (10, 11) is about 75 to 125 mm, preferably about 90 to 110 mm.

9. Apparatus according to one of claims 1 to 7 **characterised in that** a chopping device (21) is associated with the picking rollers (10, 11).

## Revendications

1. Appareil pour la récolte de maïs ou de céréales similaires, en particulier pour une moissonneuse-batteuse (2) ou une ensileuse automotrice, avec deux cylindres cueilleurs (10, 11), disposés de part et d'autre d'une fente de cueilleur (31) pour séparer la partie fruit de la partie tige qui porte cette dernière, qui sont entraînés en rotation autour d'axes de rotation (34, 35) orientés dans la direction de progression (F) de l'appareil (1) et qui sont pourvus de plusieurs barrettes (29, 30), nervures ou similaires longitudinales formant des arêtes de travail (27, 28) saillantes sur le corps de base (25, 26) du cylindre, les arêtes de travail (27, 28) des cylindres cueilleurs (10, 11), qui sont réparties sur le pourtour des corps de base (25, 26) des cylindres, formant en fonctionnement des surfaces de travail qui se rétrécissent en forme de cône en direction de l'extrémité avant des cylindres cueilleurs (10, 11) et délimitent entre elles ou avec le corps de base (25, 26) du cylindre cueilleur voisin concerné une fente de passage (36), **caractérisé en ce que** les axes de rotation (34, 35) des cylindres cueilleurs (10, 11) convergent en direction des extrémités frontales des cylindres cueilleurs (10, 11).

2. Appareil selon la revendication 1, **caractérisé en ce que** les corps de base (25, 26) des cylindres cueilleurs (10, 11) présentent une surface enveloppe conique qui est entourée, à distance et de manière concentrique, par les surfaces de travail coniques.

3. Appareil selon la revendication 1 ou 2, **caractérisé en ce que** les arêtes de travail (27) de l'un des cylindres cueilleurs (10) sont décalées par rapport aux arêtes de travail (28) de l'autre cylindre cueilleur (11) en regard chaque fois d'un espace entre arêtes de travail et **en ce que** les arêtes de travail (27, 28), pendant la rotation avec chaque fois une distance minimale vis-à-vis du corps de base (25, 26) du cylindre cueilleur voisin, définissent la fente de passage (36) avec la surface enveloppe dudit cylindre cueilleur.

4. Appareil selon une des revendications 1 à 3, **caractérisé en ce que** les arêtes de travail (27, 28) des deux cylindres cueilleurs (10, 11), pendant la rotation avec chaque fois une distance minimale par rapport à la surface de travail du cylindre cueilleur voisin, sont disposées en vis-à-vis et dans le prolongement des arêtes de travail du cylindre cueilleur voisin et définissent entre elles la fente de passage (36).

5. Appareil selon une des revendications 1 à 4, **caractérisé en ce que** la conicité des surfaces de travail des cylindres cueilleurs (10, 11) et l'angle de convergence des axes de rotation (34, 35) sont mutuellement adaptés, de telle sorte que la vitesse périphérique des surfaces de travail des cylindres cueilleurs (10 ,11) augmente d'au moins 25 %, de préférence d'environ 50 %, de l'extrémité frontale jusqu'à l'extrémité côté base.

6. Appareil selon la revendication 3, **caractérisé en ce que** la largeur de la fente de passage (36) entre les cylindres cueilleurs (10, 11) aux extrémités frontales de ceux-ci est d'environ 6 à 15 mm, de préférence d'environ 8 à 12 mm, et aux extrémités côté base est d'environ 2 à 10 mm, de préférence d'environ 3 à 6 mm.

7. Appareil selon la revendication 4, **caractérisé en ce que** la fente de passage (36) entre les cylindres cueilleurs (10, 11) présente une largeur essentiellement constante, d'environ 1 à 10 mm, de préférence d'environ 2 à 5 mm.

8. Appareil selon une des revendications 1 à 7, **caractérisé en ce que** le diamètre de la surface de travail à l'extrémité frontale des cylindres cueilleurs (10, 11) est d'environ 75 à 125 mm, de préférence d'environ 90 à 110 mm.

9. Appareil selon une des revendications 1 à 7, **caractérisé en ce que** les cylindres cueilleurs (10, 11) sont associés à un dispositif de hachage (21).
